# FASCICULE DE BREVET EUROPEEN

(11) **EP 1 760 561 B1**
(45) Date de publication et mention de la délivrance du brevet: **03.12.2008**
(21) Numéro de dépôt: 05107928.3
(22) Date de dépôt: 30.08.2005
(51) Int. Cl.: G05B 19/4093

(54) **Procédé de gestion d'informations pour la programmation de la commande d'une machine-outil**
Informationenverwaltungverfahren zur Programmierung der Steuerung einer Werkzeugmaschine
Method for managing informations for programming the control of a machine tool

(43) Date de publication de la demande: 07.03.2007
(73) Titulaire: Tornos SA, 2740 Moutier (CH)
(72) Inventeur: Lovis, Denis, 2740, Moutier (CH); Paroz, Cédric, 2732, Saicourt (CH); Pourchet, Jean-Claude, 2046, Fontaines (CH)
(74) Mandataire: BOVARD AG

(56) Documents cités:
- EP-A- 0 543 034
- US-A- 4 606 001
- US-A- 4 755 952

## Description

L'invention concerne un perfectionnement à un procédé de gestion d'informations pour la programmation de la commande d'une machine-outil.

L'invention intéresse plus particulièrement mais non exclusivement le domaine des machines-outils de décolletage.

L'invention se rapporte également à un dispositif de commande pour la mise en oeuvre du procédé et aux machines-outils comportant ce dispositif de commande.

Egalement, l'invention se rapporte aussi :
- à un logiciel pour la mise en oeuvre du procédé,
- à un support de stockage sur lequel est enregistré le logiciel comprenant les étapes du procédé.

Une machine-outil de décolletage permet l'usinage de pièces ayant un profil déterminé.

Une telle machine-outil comprend, d'une part, une pluralité d'éléments qui sont chacun mobile par rapport à un axe déterminé, c'est-à-dire autour de cet axe ou suivant cet axe déterminé et, d'autre part, des organes moteurs pour provoquer le déplacement de ces éléments.

Les organes moteurs de la machine-outil sont commandés par un dispositif de commande qui exploite un plan de commande préétabli, c'est-à-dire élaboré préalablement à l'usinage, et ce, en fonction du profil de la pièce à réaliser.

L'invention s'applique avantageusement aux machines-outils qui répètent la même opération plusieurs fois que ce soit sur le même poste, par exemple dans le cas d'un usinage répété plusieurs fois sur la même pièce, ou dans le cas où cet usinage est effectué par des postes différents.

Lorsqu'une opération doit être répétée plusieurs fois, on nomme cette opération "opération modèle" et l'opération répétée est nommée "opération clone".

L'invention s'applique encore avantageusement aux machines-outils sur lesquelles une opération qui peut être effectuée par deux outils différents choisis en fonction de leurs degrés d'usure pour effectuer une opération déterminée.

Certaines machines-outils sont structurées de manière à comporter plusieurs postes de travail distincts au niveau de chacun desquels au moins une opération d'usinage peut être effectuée sur une pièce.

L'invention s'applique de plus avantageusement aux machines-outils comportant au moins deux postes d'usinage permettant l'usinage simultané d'au moins deux pièces substantiellement identiques, c'est-à-dire, de pièces constituant en quelque sorte une pièce modèle et au moins une pièce clone.

Il est courant que plusieurs opérations soient réalisées au niveau d'un même poste et on parle alors de groupe d'opérations.

De manière connue ainsi que décrit dans le document US-A-4 606 001, chaque opération d'usinage, qu'il s'agisse d'une opération modèle ou d'une opération clone, est définie par au moins un ensemble d'instructions constitué d'une juxtaposition d'informations disposées dans un ordre déterminé et consistant en des informations qui définissent notamment des paramètres d'usinage et qui sont utilisées par le dispositif de commande pour commander au moins un organe moteur approprié.

Les machines-outils programmables comprennent préférentiellement un dispositif de commande qui permet à une personne, dite opérateur, de gérer ces ensembles d'instructions.

Avantageusement, le dispositif de commande comprend une fonctionnalité qui permet de copier un ensemble d'instructions définissant une opération modèle et de reproduire cet ensemble d'instructions pour définir une opération clone.

Lors de la réalisation des pièces, il peut s'avérer nécessaire d'effectuer des modifications, telles des corrections, sur une ou plusieurs opérations.

Le dispositif de commande permet à un opérateur d'intervenir sur le plan de commande de manière à modifier précisément chaque opération concernée.

Lorsqu'une modification affecte une opération modèle, cette modification doit être reportée sur l'opération clone correspondante, et vice versa.

La fonctionnalité du dispositif de commande qui permet de copier un ensemble d'instructions définissant une opération modèle et de reproduire cet ensemble d'instructions pour définir une opération clone permet donc de corriger facilement le plan de commande.

Cependant la justesse de la correction d'un plan de commande est étroitement liée à la vigilance de l'opérateur et des oublis de corrections sont souvent à déplorer, ce qui engendre notamment des pertes de temps préjudiciables à la production.

Un résultat que l'invention vise à obtenir est un perfectionnement à un procédé de gestion d'informations pour la programmation de la commande d'une machine-outil qui remédie aux inconvénients précités.

A cet effet, l'invention a pour objet un perfectionnement à un procédé de gestion d'informations pour la programmation de la commande d'une machine-outil, notamment, selon la revendication 1.

L'invention a également pour objet un dispositif de commande pour la mise en oeuvre du procédé et les machines-outils comportant ce dispositif de commande.

Egalement, l'invention concerne :
- un logiciel pour la mise en oeuvre du procédé,
- un support de stockage sur lequel est enregistré le logiciel comprenant les étapes du procédé.

L'invention sera bien comprise à la lecture de la description ci-après faite à titre d'exemple non limitatif en regard du dessin ci-annexé qui représente schématiquement :

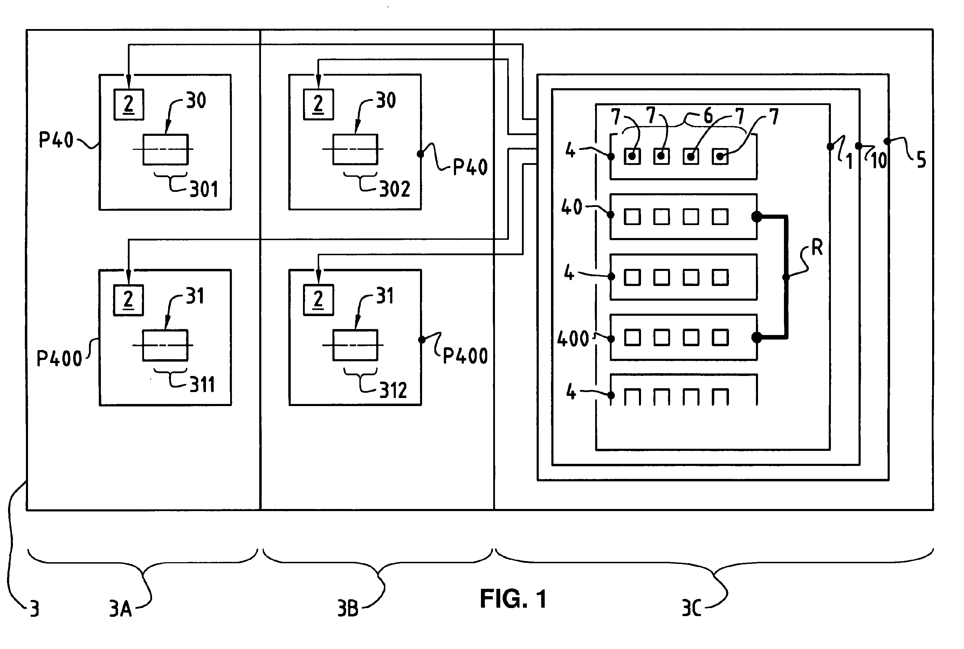

- figure 1, vue latéralement et représentée sous forme de blocs fonctionnels, une machine-outil qui met en oeuvre un procédé selon l'invention,

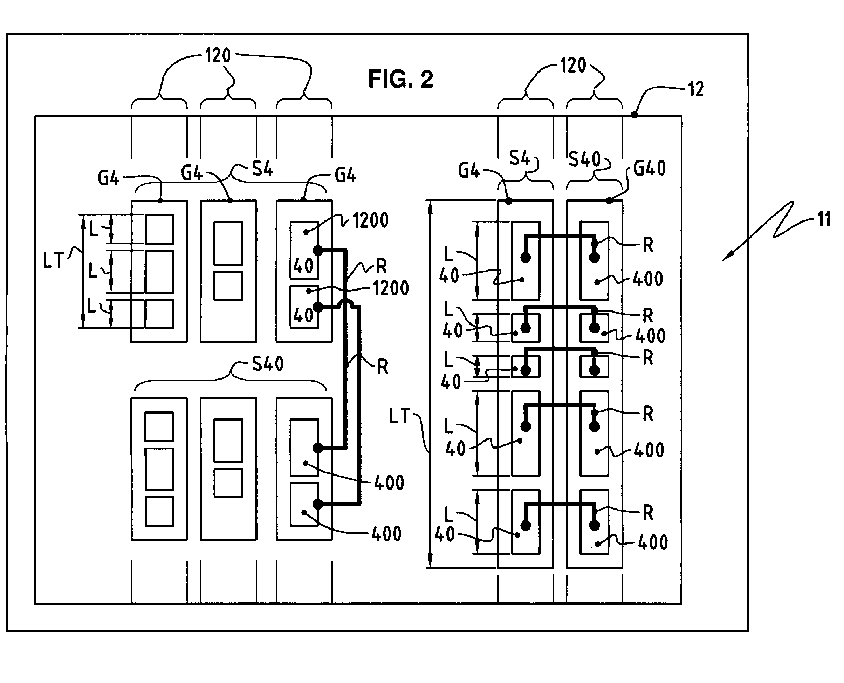

- figure 2, un écran d'affichage d'une matrice sur laquelle des opérations d'usinage ont été représentées sous formes de cases.

En se reportant au dessin, on voit une machine-outil 3 qui permet la réalisation d'une pluralité de pièces.

Bien que cela n'apparaisse pas de manière flagrante sur le dessin, on considérera que les pièces sont identiques entre elles.

Tel que cela est représenté à titre d'exemple non limitatif, la machine-outil 3 est une machine dite multi postes, c'est-à-dire une machine-outil qui comprend plusieurs postes d'usinage au niveau de chacun desquels au moins une opération d'usinage 4 peut être réalisée.

Tel que cela a été indiqué plus avant, le procédé selon l'invention ne s'applique pas uniquement à ce type de machine-outil.

Notamment au niveau de chaque poste d'usinage, une telle machine-outil 3 comprend, d'une part, une pluralité d'éléments, aussi connus sous la désignation technique de « système d'outils », qui sont chacun mobile par rapport à un axe déterminé, c'est-à-dire autour de cet axe ou suivant cet axe déterminé et, d'autre part, des organes moteurs 2 pour provoquer le déplacement de ces éléments.

Les éléments déplacés par les organes moteurs 2 peuvent être de tout type.

Il peut s'agir de chariots porte-outils, de broches...

Ces éléments n'ont pas été représentés.

Les organes moteurs 2 de la machine-outil 3 sont commandés par un dispositif de commande 5 qui exploite un plan de commande 1 préétabli, c'est-à-dire élaboré préalablement à l'usinage, et ce, en fonction des caractéristiques de profil de la pièce à réaliser.

La machine-outil met en oeuvre au moins un outil d'usinage (non représenté) et, classiquement, une pluralité d'outils d'usinage.

La machine-outil peut également mettre en oeuvre des ensembles plus ou moins complexes d'outils.

Pour cette raison, l'expression "outil d'usinage" est utilisée pour désigner un "outil" en tant qu'élément isolé ou ensemble d'outils, tel que précédemment évoqué.

Avec ces outils d'usinage, la machine-outil est capable de réaliser au moins une opération et, classiquement, une pluralité d'opérations d'usinage.

Les outils d'usinage, ainsi que les opérations d'usinage sont choisis, en général par l'opérateur.

De préférence, mais de manière non obligatoire, le choix des outils est effectué dans un catalogue d'outils d'usinage et le choix des opérations d'usinage est effectué dans un catalogue d'opérations d'usinage.

De préférence, ces catalogues sont mémorisés dans le dispositif de commande 5.

Evidemment, des liens existent entre la nature des opérations d'usinage et la nature des outils, à savoir que certains outils sont spécifiques à certaines opérations d'usinages, mais cela n'est pas l'objet de la présente invention.

Le dispositif de commande 5 comprend notamment un ordinateur (non représenté) utilisé notamment pour commander les organes moteurs en fonction du plan de commande 1.

Tel que cela apparaît dans le cas de l'exemple non limitatif représenté, la machine-outil 3 est structurée de manière à comporter plusieurs postes de travail distincts au niveau de chacun desquels au moins une opération d'usinage 4 peut être effectuée sur une pièce.

Dans l'exemple non limitatif représenté, la machine-outil 3 est conçue pour permettre l'usinage simultané d'au moins deux pièces, dont une pièce modèle 30 et au moins une pièce clone 31 et :
- d'une part, la réalisation de la pièce modèle 30 nécessite au moins une opération d'usinage 4 déterminée, dite opération modèle 40, et
- d'autre part, la réalisation de la pièce clone 31 nécessite également au moins une opération d'usinage 4 qui, substantiellement identique à l'opération modèle 40 à réaliser sur la pièce modèle 30, est dite opération clone 400.
   De manière générale, il faut considérer qu'une opération modèle 40 est une opération d'usinage réalisée sur une pièce déterminée et qu'une opération clone 400 est une opération d'usinage sensiblement identique à l'opération modèle 40 et qui peut quant à elle être réalisée sur ladite pièce déterminée et/ou sur une pièce distincte dans ce cas dite pièce clone.
   L'expression "opération d'usinage 4" utilisée dans le présent texte est utilisée pour désigner tout type d'opération d'usinage 4 et, notamment, une opération modèle 40 et son opération clone 400 mais également tout autre opération d'usinage 4 qui ne répond pas aux critères de définition d'une opération modèle ou d'une opération clone.
   Par exemple, l'opération modèle 40 est réalisée sur un premier poste d'usinage, dit premier poste P40 et l'opération clone 400 est réalisée sur un poste d'usinage, dit second poste P400, distinct du premier poste P40.
   Le terme "pièce" utilisé dans le présent texte est utilisé pour désigner tout type de pièce, qu'il s'agisse d'une pièce modèle 30 ou d'une pièce clone 31.
   Pour faciliter la compréhension, on peut considérer qu'une pièce clone 31 est une pièce qui est identique à une autre pièce dite pièce modèle 30, usinée après la pièce modèle et/ou en même en même temps.
   On note qu'un dispositif de commande 5 est associé à la machine-outil 3 et que ce dispositif de commande 5 exploite un plan de commande 1 qui a été préalablement construit.
   La construction du plan de commande 1 a été effectuée par inscription sur un support de mémorisation 10 d'ensembles 6 d'instructions.
   Précisément, chaque opération modèle 40 ou chaque opération clone 400 est définie par au moins un ensemble 6 d'instructions constitué d'une juxtaposition d'informations 7 disposées dans un ordre déterminé.
   Chaque ensemble 6 d'instructions consiste en des informations 7 qui définissent notamment des paramètres d'usinage et qui sont utilisées par le dispositif de commande 5 pour commander au moins un organe moteur 2 approprié.
   Chaque ensemble 6 d'instructions est organisé de manière telle qu'au moins l'une des informations 7 qui le constitue puisse être modifiée, notamment afin d'ajuster au moins un paramètre d'usinage défini par l'ensemble 6 d'instructions concerné.
   De manière remarquable, selon le procédé, lors de la construction du plan de commande par inscription d'ensembles 6 d'instructions, au plus tôt après avoir inscrit chaque ensemble 6 d'instructions définissant une opération d'usinage 4 et selon une procédure automatique préalablement établie,
- on réalise une recherche automatique pour détecter si l'opération d'usinage 4 considérée doit être traitée comme une opération modèle 40 du fait de l'existence d'une opération clone 400 correspondante, et
- lorsqu'une opération modèle 40 et l'opération clone 400 correspondante sont trouvées, on associe l'ensemble 6 d'instructions constituant l'opération modèle avec l'ensemble 6 d'instructions constituant l'opération clone 400 correspondante par au moins une relation de liaison R prédéterminée et telle que la modification ultérieure d'au moins une information 7 déterminée de l'un quelconque de ces deux ensembles 6 d'instructions, induit la modification automatique d'au moins une information 7 également déterminée de l'autre ensemble 6 d'instructions qui lui est lié.

L'homme de l'art, notamment l'informaticien, est à même de mettre en place les relations de liaison R annoncées.

Le procédé permet donc de corriger d'une manière automatique chaque opération clone 400 qui nécessite une correction, ce qui affranchit l'opérateur du risque d'oubli de ladite correction.

De manière encore notable, on associe chaque ensemble 6 d'instructions constituant une opération modèle 40 à l'ensemble 6 d'instructions constituant une opération clone 400 correspondante par au moins une relation de liaison R de type réversible, c'est-à-dire une relation de liaison R qui peut être supprimée à tout moment choisi, notamment, par l'opérateur.

Le fait que la relation de liaison soit réversible permet donc, lorsque cela est nécessaire, de corriger notablement le plan de commande.

La relation de liaison R peut à sens unique ou, de préférence à double sens.

Lorsqu'elle est à sens unique, une modification apportée sur une opération modèle 40 induit une modification sur l'opération clone 400 correspondante, mais la réciproque n'est pas vraie.

Lorsque la relation de liaison R est à double sens, la modification peut être apportée sur l'opération clone 400 ou sur l'opération modèle correspondante 40 et la correction est reportée.

Tel que cela est schématisé, la machine-outil 3 permet la réalisation d'opérations d'usinage 4 sur :
- une pièce modèle 30 comportant une première portion 301 et une seconde portion 302 qui sont réalisées par usinage, la première portion 301 étant réalisée sur une première partie 3A de la machine-outil 3 et la seconde portion 302 étant réalisée sur une seconde partie 3B de la machine-outil 3, et
- au moins une pièce clone 31 comportant une première portion 311 et une seconde portion 312 qui sont réalisées par usinage, la première portion 311 étant réalisée sur la première partie 3A de la machine-outil 3 et la seconde portion 312 étant réalisée sur la seconde partie 3B de la machine-outil 3.

De manière notable, selon une première version du procédé, lors de la construction du plan de commande 1, pour rechercher les opérations modèles 40 et les opérations clones 400, on considère séparément les opérations d'usinage 4 qui sont réalisées sur la première partie 3A de la machine-outil 3 et opérations qui sont réalisées sur la deuxième partie 3B de la machine-outil 3.

Cela permet donc qu'un traitement différent soit apporté aux opérations d'usinage 4 qui concernent la première portion de la pièce considérée et aux opérations d'usinage 4 qui concernent la seconde portion de ladite pièce considérée.

De manière encore notable, selon une deuxième version du procédé, lors de la construction du plan de commande 1, pour rechercher les opérations modèles 40 et les opérations clones 400, on considère ensemble les opérations d'usinage 4 qui sont réalisées sur la première partie 3A de la machine-outil 3 et opérations qui sont réalisées sur la deuxième partie 3B de la machine-outil 3.

Dans ce cas, cela permet au contraire qu'un même traitement soit apporté aux opérations d'usinage 4 qui concernent la première portion de la pièce considérée et aux opérations d'usinage 4 qui concernent la seconde portion de la pièce considérée.

Le dispositif de commande 5 est par exemple situé dans une troisième partie 3C de la machine-outil 3.

De manière remarquable, on organise chaque ensemble 6 d'instructions de manière telle que pour chaque opération d'usinage 4, il comprenne des informations 7 qui, au moins, identifient :
- l'organe moteur 2 concerné par l'opération d'usinage 4 à réaliser,
- l'outil d'usinage concerné par l'opération d'usinage 4 à réaliser,
- une opération d'usinage 4 distincte de l'opération d'usinage 4 concernée et avec laquelle il existe une contrainte de temps.

De manière notable, lors de la construction du plan de commande 1 :
- on met en oeuvre un écran d'affichage 11 sur lequel on constitue une matrice 12 comportant des rangées sensiblement parallèles, telles des colonnes 120,
- on attribue chaque rangée 120 à un poste d'usinage de la machine-outil 3, et
- dans chaque rangée 120, on affiche chaque opération d'usinage 4 sous la forme d'une case 1200 dont la dimension longitudinale L dans la direction longitudinale de la rangée 120 considérée est proportionnelle à la durée de réalisation de l'opération d'usinage 4 considérée,
- on affiche chaque relation de liaison R entre chaque opération modèle 40 et l'opération clone 400 correspondante.

L'homme de l'art est à même d'imaginer différentes solutions pour afficher les relations "R".

Egalement, l'homme de l'art est à même de choisir la solution d'affichage qui permet de visualiser au mieux les opérations d'usinage, au moyen d'icônes.

Les rangées 120 attribuées à chaque poste d'usinage sont, par exemple, orientées verticalement sur l'écran (cas représenté), mais elles pourraient être orientées horizontalement.

Quoi qu'il en soit l'affichage s'avère très pratique notamment, lorsqu'au moins l'une des pièces que sont la pièce modèle 30 et la pièce clone, nécessite au moins :
- une série S4 d'au moins un groupe d'opérations d'usinage 4 déterminées, dit groupe d'opérations modèles G4 et dont la réalisation sur la machine-outil 2 implique une durée déterminée, et
- au moins une série S40 d'au moins un groupe d'opérations d'usinage 4 qui, substantiellement identique à un groupe d'opérations modèles, est dit groupe d'opérations clones G40 et dont la réalisation sur la machine-outil 2 implique une durée déterminée.

Cela s'avère particulièrement pratique lorsque :
- la réalisation de la pièce modèle 30 nécessite au moins une série S4 d'au moins un groupe d'opérations d'usinage 4 déterminées, dit groupe d'opérations modèles G4 et dont la réalisation sur la machine-outil 2 implique une durée déterminée, et
- la réalisation de la pièce clone 31 nécessite également au moins une série S40 d'au moins un groupe d'opérations d'usinage 4 qui, substantiellement identique à un groupe d'opérations modèles, est dit groupe d'opérations clones G40 et dont la réalisation sur la machine-outil 2 implique une durée déterminée.

De préférence, lors de la construction du plan de commande 1 :
- dans chaque rangée 120 de la matrice 12, on affiche chaque opération sous la forme d'une case 1200 dont la dimension longitudinale L est proportionnelle à la durée de réalisation de l'opération d'usinage 4 considérée,
- on affiche les opérations d'usinage 4 réunies en groupes en juxtaposant les cases 1200 de manière à constituer un groupe de cases 1200 dont la dimension longitudinale totale LT est proportionnelle à la durée du groupe d'opérations d'usinage 4 considéré.

Cette manière d'afficher les opérations d'usinage permet à l'opérateur (non représenté) de, par exemple, vérifier la possibilité de réaliser des opérations en temps masqué sur la deuxième partie de la machine-outil.

Le procédé selon l'invention est utilisé conjointement avec un procédé de commande des organes moteurs 2 de systèmes d'outils que la machine-outil comprend, lequel procédé de commande met en oeuvre au moins une table des pas préalablement établie en fonction du profil de la pièce à usiner.

Chaque table des pas qui, associée à au moins un organe moteur 2 déterminé destiné à assurer un déplacement selon un axe également déterminé, peut être représentée sous la forme d'une première grille définie par deux groupes de lignes entrecroisées, constituant :
- une première rangée de cases juxtaposées chacune attribuée à au moins un instant élémentaire de commande du déplacement incrémental de l'organe moteur 2 concerné, et
- une seconde rangée de cases juxtaposées chacune attribuée à une consigne de déplacement incrémental, dite première consigne, qui doit être imposée à l'organe moteur 2, à partir de l'instant élémentaire indiqué dans la case de la première rangée qui est juxtaposée, la valeur de chaque première consigne étant prédéterminée en fonction du profil de la pièce à usiner.

L'invention concerne également un logiciel pour la mise en oeuvre du procédé, ce logiciel comprenant des codes d'instructions ou instructions propres à être lus ou stockés sur un support de stockage, lesdits codes étant exécutables par un ordinateur, tel celui destiné à générer des ordres de déplacement pour une machine-outil comprenant plusieurs organes moteurs, ce logiciel étant remarquable en ce qu'il comprend au moins une première étape et au moins une deuxième étape qui sont mises en oeuvre lors de la construction du plan de commande des organes moteurs de la machine-outil par inscription d'ensembles 6 d'instructions, au plus tôt après l'inscription de chaque ensemble 6 d'instructions définissant une opération d'usinage 4,
- la première étape consistant en une étape de recherche automatique pour détecter si l'opération d'usinage 4 considérée doit être traitée comme une opération modèle 40 du fait de l'existence d'une opération clone 400 correspondante, et
- la deuxième étape consistant en une étape au cours de laquelle, lorsqu'une opération modèle 40 et l'opération clone 400 correspondante sont trouvées,
   - l'ensemble 6 d'instructions constituant l'opération modèle 40 est associé avec
   - l'ensemble 6 d'instructions constituant l'opération clone 400 correspondante, et ce,
par au moins une relation de liaison R prédéterminée et telle que la modification ultérieure d'au moins une information 7 déterminée de l'un quelconque de ces deux ensembles 6 d'instructions, induit la modification automatique d'au moins une information 7 également déterminée de l'autre ensemble 6 d'instructions qui lui est lié.

L'invention concerne aussi le support de stockage sur lequel est enregistré le logiciel comprenant des codes d'instructions propres à être lus ou stockés sur un support de stockage, lesdits codes étant exécutables par un ordinateur, tel celui destiné à générer des ordres de déplacement pour une machine-outil 3 comprenant plusieurs organes moteurs 2.

L'invention concerne également un dispositif de commande pour la mise en oeuvre du procédé de gestion d'informations pour la construction d'un plan de commande 1 d'organes moteurs 2 d'une machine-outil 3 en vue de la réalisation d'une pluralité de pièces qui sont identiques entre elles,
cette machine-outil 3 étant, d'une part, associée au dit dispositif de commande 5 destiné à exploiter le plan de commande 1 et, d'autre part, conçue pour permettre l'usinage d'au moins deux pièces, dont une pièce modèle 30 et au moins une pièce clone 31, la réalisation d'au moins l'une des pièces dites pièce modèle 30 et pièce clone 31 nécessitant, des opérations d'usinage 4 déterminées, parmi lesquelles,
- au moins une opération modèle 40, et
- au moins une autre opération d'usinage 4 qui, substantiellement identique à l'opération modèle 40, est dite opération clone 400,
chaque opération modèle 40 et chaque opération clone 400 étant définie par au moins un ensemble 6 d'instructions constitué d'une juxtaposition d'informations 7 disposées dans un ordre déterminé et consistant en des informations 7 qui sont utilisées par le dispositif de commande 5 pour commander au moins un organe moteur 2 approprié,
chaque ensemble 6 d'instructions étant organisé de manière telle qu'au moins l'une des informations 7 qui le constitue puisse être modifiée,
la construction du plan de commande 1 s'effectuant par inscription sur un support de mémorisation 10 d'ensembles 6 d'instructions,
ledit dispositif de commande comportant des moyens fonctionnels remarquables en ce qu'ils consistent en des blocs fonctionnels pour lors de la construction du plan de commande par inscription d'ensembles 6 d'instructions, au plus tôt après avoir inscrit chaque ensemble 6 d'instructions définissant une opération d'usinage 4 et selon une procédure automatique préalablement établie :
- réaliser une recherche automatique pour détecter si l'opération d'usinage 4 considérée doit être traitée comme une opération modèle 40 du fait de l'existence d'une opération clone 400 correspondante, et
- lorsqu'une opération modèle 40 et l'opération clone 400 correspondante sont trouvées, associer l'ensemble 6 d'instructions constituant l'opération modèle avec l'ensemble 6 d'instructions constituant l'opération clone 400 correspondante par au moins une relation de liaison R prédéterminée et telle que la modification ultérieure d'au moins une information 7 déterminée de l'un quelconque de ces deux ensembles 6 d'instructions, induit la modification automatique d'au moins une information 7 également déterminée de l'autre ensemble 6 d'instructions qui lui est lié.

L'invention concerne également le dispositif de commande pour machine-outil 3 comprenant
- un ordinateur pour exécuter des codes d'instructions, enregistrés sur un support de stockage,
- un écran d'affichage 11 d'informations pour l'affichage d'un plan de commande 1 sous la forme d'une matrice 12 comportant des rangées sensiblement parallèles, telles des colonnes 120,

- chaque rangée 120 étant attribuée à un poste d'usinage de la machine-outil 3, et comprenant au moins une case 1200 qui, attribuée à une opération d'usinage 4, a une dimension longitudinale L dans la direction longitudinale de la rangée 120 considérée qui est proportionnelle à la durée de réalisation de l'opération d'usinage 4 considérée,
- chaque relation de liaison R entre chaque opération modèle 40 et l'opération clone 400 correspondante étant affichée sous une forme discernable par un opérateur.

## Revendications

1. Procédé de gestion d'informations pour la construction d'un plan de commande (1) d'organes moteurs (2) d'une machine-outil (3) en vue de la réalisation d'une pluralité de pièces qui sont identiques entre elles,
cette machine-outil (3) étant, d'une part, associée à un dispositif de commande (5) destiné à exploiter le plan de commande (1) et, d'autre part, conçue pour permettre l'usinage d'au moins deux pièces, dont une pièce modèle (30) et au moins une pièce clone (31), la réalisation d'au moins l'une des pièces dites pièce modèle (30) et pièce clone (31) nécessitant, des opérations d'usinage (4) déterminées, parmi lesquelles,
. au moins une opération modèle (40), et
. au moins une autre opération d'usinage (4) qui, substantiellement identique à l'opération modèle (40), est dite opération clone (400),
chaque opération modèle (40) et chaque opération clone (400) étant définie par au moins un ensemble (6) d'instructions constitué d'une juxtaposition d'informations (7) disposées dans un ordre déterminé et consistant en des informations (7) qui sont utilisées par le dispositif de commande (5) pour commander au moins un organe moteur (2) approprié,
chaque ensemble (6) d'instructions étant organisé de manière telle qu'au moins l'une des informations (7) qui le constitue puisse être modifiée,
la construction du plan de commande (1) s'effectuant par inscription sur un support de mémorisation (10) d'ensembles (6) d'instructions,
ce procédé étant **caractérisé en ce que** lors de la construction du plan de commande par inscription d'ensembles (6) d'instructions, au plus tôt après avoir inscrit chaque ensemble (6) d'instructions définissant une opération d'usinage (4) et selon une procédure automatique préalablement établie :
- on réalise une recherche automatique pour détecter si l'opération d'usinage (4) considérée doit être traitée comme une opération modèle (40) du fait de l'existence d'une opération clone (400) correspondante, et
- lorsqu'une opération modèle (40) et l'opération clone (400) correspondante sont trouvées, on associe l'ensemble (6) d'instructions constituant l'opération modèle avec l'ensemble (6) d'instructions constituant l'opération clone (400) correspondante par au moins une relation de liaison (R) prédéterminée et telle que la modification ultérieure d'au moins une information (7) déterminée de l'un quelconque de ces deux ensembles (6) d'instructions, induit la modification automatique d'au moins une information (7) également déterminée de l'autre ensemble (6) d'instructions qui lui est lié.

2. Procédé selon la revendication 1 **caractérisé en ce qu'**on associe chaque ensemble (6) d'instructions constituant une opération modèle (40) à l'ensemble (6) d'instructions constituant une opération clone (400) correspondante par au moins une relation de liaison (R) de type réversible, c'est-à-dire une relation de liaison (R) qui peut être supprimée à tout moment choisi.

3. Procédé selon la revendication 1 ou 2, **caractérisé en ce que** :
- on met en oeuvre un écran d'affichage (11) sur lequel on constitue une matrice (12) comportant des rangées sensiblement parallèles,
- on attribue chaque rangée (120) à un poste d'usinage de la machine-outil (3), et
- dans chaque rangée (120), on affiche chaque opération d'usinage (4) sous la forme d'une case (1200) dont la dimension longitudinale (L) dans la direction longitudinale de la rangée (120) considérée est proportionnelle à la durée de réalisation de l'opération d'usinage (4) considérée,
- on affiche chaque relation de liaison (R) entre chaque opération modèle (40) et l'opération clone (400) correspondante.

4. Procédé selon la revendication 3 **caractérisé en ce que** lors de la construction du plan de commande (1) :
- dans chaque rangée (120) de la matrice (12), on affiche chaque opération sous la forme d'une case (1200) dont la dimension longitudinale (L) est proportionnelle à la durée de réalisation de l'opération d'usinage (4) considérée,
- on affiche les opérations d'usinage (4) réunies en groupes en juxtaposant les cases (1200) de manière à constituer un groupe de cases (1200) dont la dimension longitudinale totale (LT) est proportionnelle à la durée du groupe d'opérations d'usinage (4) considéré.

5. Procédé selon l'une quelconque des revendications 1 à 4 en vue de la réalisation d'opérations d'usinage (4) sur :
- une pièce modèle (30) comportant une première portion (301) et une seconde portion (302) qui sont réalisées par usinage, la première portion (301) étant réalisée sur une première partie (3A) de la machine-outil (3) et la seconde portion (302) étant réalisée sur une seconde partie (3B) de la machine-outil (3), et
- au moins une pièce clone (31) comportant une première portion (311) et une seconde portion (312) qui sont réalisées par usinage, la première portion (311) étant réalisée sur la première partie (3A) de la machine-outil (3) et la seconde portion (312) étant réalisée sur la seconde partie (3B) de la machine-outil (3),
ce procédé étant **caractérisé en ce que** lors de la construction du plan de commande (1), pour rechercher les opérations modèles (40) et les opérations clones (400), on considère séparément les opérations d'usinage (4) qui sont réalisées sur la première partie (3A) de la machine-outil (3) et opérations qui sont réalisées sur la deuxième partie (3B) de la machine-outil (3).

6. Procédé selon l'une quelconque des revendications 1 à 4 en vue de la réalisation d'opérations d'usinage (4) sur :
- une pièce modèle (30) comportant une première portion (301) et une seconde portion (302) qui sont réalisées par usinage, la première portion (301) étant réalisée sur une première partie (3A) de la machine-outil (3) et la seconde portion (302) étant réalisée sur une seconde partie (3B) de la machine-outil (3), et
- au moins une pièce clone (31) comportant une première portion (311) et une seconde portion (312) qui sont réalisées par usinage, la première portion (311) étant réalisée sur la première partie (3A) de la machine-outil (3) et la seconde portion (312) étant réalisée sur la seconde partie (3B) de la machine-outil (3),
ce procédé étant **caractérisé en ce que** lors de la construction du plan de commande (1), pour rechercher les opérations modèles (40) et les opérations clones (400), on considère ensemble les opérations d'usinage (4) qui sont réalisées sur la première partie (3A) de la machine-outil (3) et opérations qui sont réalisées sur la deuxième partie (3B) de la machine-outil (3).

7. Procédé selon l'une quelconque des revendications 1 à 6, **caractérisé en ce qu'**on organise chaque ensemble (6) d'instructions de manière telle que pour chaque opération d'usinage (4), il comprenne des informations (7) qui, au moins, identifient :
- l'organe moteur (2) concerné par l'opération d'usinage (4) à réaliser,
- l'outil d'usinage concerné par l'opération d'usinage (4) à réaliser,
- une opération d'usinage (4) distincte de l'opération d'usinage (4) concernée et avec laquelle il existe une contrainte de temps.

8. Procédé selon l'une quelconque des revendications 1 à 7 **caractérisé en ce qu'**il est utilisé conjointement avec un procédé de commande d'organes moteurs (2) de systèmes d'outils que la machine-outil comprend, c'est-à-dire d'éléments mobiles de la machine-outil, ce procédé de commande mettant en oeuvre au moins une table des pas qui, associée à au moins un organe moteur (2) déterminé destiné à assurer un déplacement selon un axe également déterminé, peut être représentée sous la forme d'une première grille définie par deux groupes de lignes entrecroisées, constituant :
- une première rangée de cases juxtaposées chacune attribuée à au moins un instant élémentaire de commande du déplacement incrémental de l'organe moteur (2) concerné, et
- une seconde rangée de cases juxtaposées chacune attribuée à une consigne de déplacement incrémental, dite première consigne, qui doit être imposée à l'organe moteur (2), à partir de l'instant élémentaire indiqué dans la case de la première rangée qui est juxtaposée, la valeur de chaque première consigne étant prédéterminée en fonction du profil de la pièce à usiner.

9. Logiciel pour la mise en oeuvre du procédé selon l'une quelconque des revendications 1 à 8,
ce logiciel comprenant des codes d'instructions ou instructions propres à être lus ou stockés sur un support de stockage,
lesdits codes étant exécutables par un ordinateur,
ce logiciel étant **caractérisé en ce qu'**il comprend au moins une première étape et au moins une deuxième étape qui sont mises en oeuvre lors de la construction du plan de commande des organes moteurs de la machine-outil par inscription d'ensembles (6) d'instructions, au plus tôt après l'inscription de chaque ensemble (6) d'instructions définissant une opération d'usinage (4),
- la première étape consistant en une étape de recherche automatique pour détecter si l'opération d'usinage (4) considérée doit être traitée comme une opération modèle (40) du fait de l'existence d'une opération clone (400) correspondante, et
- la deuxième étape consistant en une étape au cours de laquelle, lorsqu'une opération modèle (40) et l'opération clone (400) correspondante sont trouvées,
. l'ensemble (6) d'instructions constituant l'opération modèle est associé avec
. l'ensemble (6) d'instructions constituant l'opération clone (400) correspondante, et ce,
par au moins une relation de liaison (R) prédéterminée et telle que la modification ultérieure d'au moins une information (7) déterminée de l'un quelconque de ces deux ensembles (6) d'instructions, induit la modification automatique d'au moins une information (7) également déterminée de l'autre ensemble (6) d'instructions qui lui est lié.

10. Support de stockage sur lequel est enregistré le logiciel comprenant des codes d'instructions ou instructions propres à être lus ou stockés sur un support de stockage, lesdits codes étant exécutables par un ordinateur pour exécuter le procédé de gestion selon l'invention.

11. Dispositif de commande pour machine-outil, pour la mise en oeuvre du procédé de gestion d'informations pour la construction d'un plan de commande (1) d'organes moteurs (2) d'une machine-outil (3) en vue de la réalisation d'une pluralité de pièces qui sont identiques entre elles,
cette machine-outil (3) étant, d'une part, associée au dit dispositif de commande (5) destiné à exploiter le plan de commande (1) et, d'autre part, conçue pour permettre l'usinage d'au moins deux pièces, dont une pièce modèle (30) et au moins une pièce clone (31), la réalisation d'au moins l'une des pièces dites pièce modèle (30) et pièce clone (31) nécessitant, des opérations d'usinage (4) déterminées, parmi lesquelles,
. au moins une opération modèle (40), et
. au moins une autre opération d'usinage (4) qui, substantiellement identique à l'opération modèle (40), est dite opération clone (400),
chaque opération modèle (40) et chaque opération clone (400) étant définie par au moins un ensemble (6) d'instructions constitué d'une juxtaposition d'informations (7) disposées dans un ordre déterminé et consistant en des informations (7) qui sont utilisées par le dispositif de commande (5) pour commander au moins un organe moteur (2) approprié,
chaque ensemble (6) d'instructions étant organisé de manière telle qu'au moins l'une des informations (7) qui le constitue puisse être modifiée,
la construction du plan de commande (1) s'effectuant par inscription sur un support de mémorisation (10) d'ensembles (6) d'instructions,
ledit dispositif de commande comprenant des moyens fonctionnels **caractérisés en ce qu'**ils consistent en des blocs fonctionnels pour lors de la construction du plan de commande par inscription d'ensembles (6) d'instructions, au plus tôt après avoir inscrit chaque ensemble (6) d'instructions définissant une opération d'usinage (4) et selon une procédure automatique préalablement établie :
- réaliser une recherche automatique pour détecter si l'opération d'usinage (4) considérée doit être traitée comme une opération modèle (40) du fait de l'existence d'une opération clone (400) correspondante, et
- lorsqu'une opération modèle (40) et l'opération clone (400) correspondante sont trouvées, associer l'ensemble (6) d'instructions constituant l'opération modèle avec l'ensemble (6) d'instructions constituant l'opération clone (400) correspondante par au moins une relation de liaison (R) prédéterminée et telle que la modification ultérieure d'au moins une information (7) déterminée de l'un quelconque de ces deux ensembles (6) d'instructions, induit la modification automatique d'au moins une information (7) également déterminée de l'autre ensemble (6) d'instructions qui lui est lié.

12. Dispositif de commande selon la revendication 11, **caractérisé en ce qu'**il comprend :
- un ordinateur pour exécuter des codes d'instructions, enregistrés sur un support de stockage,
- un écran d'affichage (11) d'informations, pour l'affichage d'un plan de commande (1) sous la forme d'une matrice (12) comportant des rangées sensiblement parallèles, telles des colonnes (120),
. chaque rangée (120) étant attribuée à un poste d'usinage de la machine-outil (3), et comprenant au moins une case (1200) qui, attribuée à une opération d'usinage (4), a une dimension longitudinale (L) dans la direction longitudinale de la rangée (120) considérée qui est proportionnelle à la durée de réalisation de l'opération d'usinage (4) considérée,
. chaque relation de liaison (R) entre chaque opération modèle (40) et l'opération clone (400) correspondante étant affichée sous une forme discernable par un opérateur.

13. Machine-outil **caractérisée en ce qu'**elle comprend un dispositif de commande selon l'une des revendications 11 ou 12.

## Claims

1. Information management method for construction of a plan for control of the motor elements (2) of a machine tool (3) with a view to creating a plurality of pieces which are identical to one another,
this machine tool (3) being, on the one hand, linked to a control device (5) intended to make use of the control plan (1) and, on the other hand, conceived to permit the use of at least two pieces, which are a model piece (30) and at least one clone piece (31), the creation of at least one of the pieces referred to as model piece (30) and clone piece (31) requiring predetermined machining operations (4), among these being
• at least one model operation (40), and
• at least one other machining operation (4) which, substantially identical to the model operation (40), is referred to as clone operation (400),
each model operation (40) and each clone operation (400) being defined by at least one set (6) of instructions made up of a juxtaposition of information (7) disposed in a predetermined command and consisting of data (7) which are used by the control device (5) to control at least one adapted motor element (2),
each set (6) of instructions being organised in such a way that at least one piece of the information (7) of which it is composed can be modified,
the construction of the control plan (1) being carried out by recording of sets (6) of instructions on a medium for storage (10),
this method being **characterised in that** during the construction of the control plan by recording of sets (6) of instructions, at the very earliest after having recorded each set (6) of instructions defining a machining operation (4) and according to an automatic procedure established beforehand:
- an automatic search is made to detect whether the machining operation (4) under consideration must be processed as a model operation (40) owing to the existence of a corresponding clone operation (400), and
- when a model operation (40) and the corresponding clone operation (400) are found, the set (6) of instructions constituting the model operation is linked with the set (6) of instructions constituting the corresponding clone operation (400) through at least one predetermined linking relationship (R) and such that the subsequent modification of at least one predetermined piece of information (7) of either one of these two sets (6) of instructions causes the automatic modification of at least one likewise predetermined piece of information (7) of the other set (6) of instructions which is linked to it.

2. Method according to claim 1, **characterised in that** each set (6) of instructions constituting a model operation (40) is linked with the set (6) of instructions constituting a corresponding clone operation (400) through at least one linking relationship (R) of reversible type, i.e. a linking relationship (R) which can be cancelled at any desired moment.

3. Method according to claim 1 or 2, **characterised in that**:
- a display screen (11) is implemented on which a matrix (12) is formed comprising substantially parallel rows,
- each row (120) is assigned to a machining station of the machine tool (3), and
- in each row (120), each machining operation (4) is displayed in the form of a box (1200), the longitudinal dimension of which (L) in the longitudinal direction of the row (120) under consideration is proportional to the duration of performance of the machining operation (4) under consideration,
- each linking relationship (R) between each model operation (40) and the corresponding clone operation (400) is displayed.

4. Method according to claim 3, **characterised in that** during the configuration of the control plan (1):
- in each row (120) of the matrix (12), each operation is displayed in the form of a box (1200), the longitudinal dimension (L) of which is proportional to the duration of performance of the machining operation (4) under consideration,
- the machining operations (4) are displayed combined in groups by juxtaposing the boxes (1200) in such a way as to constitute a group of boxes (1200), the total longitudinal dimension (LT) of which is proportional to the duration of the set of machining operations (4) under consideration.

5. Method according to any one of the claims 1 to 4, with a view to performing machining operations (4) on:
- a model piece (30) comprising a first portion (301) and a second portion (302) which are achieved by machining, the first portion (301) being achieved on a first part (3A) of the machine tool (3) and the second portion (302) being achieved on a second part (3B) of the machine tool (3), and
- at least one clone piece (31) comprising a first portion (311) and a second portion (312) which are achieved by machining, the first portion (311) being achieved on the first part (3A) of the machine tool (3) and the second portion (312) being achieved on the second part (3B) of the machine tool (3),
this method being **characterised in that** during the construction of the control plan (1), to search for the model operations (40) and the clone operations (400), considered separately are the machining operations (4) which are performed on the first part (3A) of the machine tool (3) and operations which are performed on the second part (3B) of the machine tool (3).

6. Method according to any one of the claims 1 to 4, with a view to performing machining operations (4) on:
- a model piece (30) comprising a first portion (301) and a second portion (302) which are achieved by machining, the first portion (301) being achieved on a first part (3A) of the machine tool (3) and the second portion (302) being achieved on a second part (3B) of the machine tool (3), and
- at least one clone piece (31), comprising a first portion (311) and a second portion (312), which are achieved by machining, the first portion (311) being achieved on the first part (3A) of the machine tool (3) and the second portion (312) being achieved on the second part (3B) of the machine tool (3),
this method being **characterised in that** during the construction of the control plan (1), to search for the model operations (40) and the clone operations (400), considered together are the machining operations (4) which are achieved on the first part (3A) of the machine tool (3) and operations which are achieved on the second part (3B) of the machine tool (3).

7. Method according to any one of the claims 1 to 6, **characterised in that** each set (6) of instructions is organised in such a way that for each machining operation (4), included are data (7) identifying at least:
- the motor element (2) concerned by the machining operation (4) to be performed,
- the machining tool concerned by the machining operation (4) to be performed,
- a machining operation (4) separate from the machining operation (4) concerned and with which a time constraint exists.

8. Method according to any one of the claims 1 to 7, **characterised in that** it is employed together with a method for control of motor elements (2) of systems of tools which the machine tool comprises, i.e. movable elements of the machine tool, this control method implementing at least one table of steps which, linked with at least one predetermined motor element (2) intended to ensure a displacement along a likewise predetermined axis, can be represented in the form of a first grid defined by two sets of crisscrossed lines, constituting:
- a first row of juxtaposed boxes, each assigned to at least one elementary instant of control of the incremental displacement of the motor element (2) concerned, and
- a second row of juxtaposed boxes, each assigned to a set point of incremental displacement, referred to as first set point, which must be imparted to the motor element (2), starting from the elementary instant indicated in the box of the first row which is juxtaposed, the value of each first set point being predetermined as a function of the profile of the piece to be machined.

9. Software for implementing the method according to any one of the claims 1 to 8,
this software comprising codes of instructions or instructions themselves to be read or stored on a storage medium,
said codes being able to be executed by a computer,
this software being **characterised in that** it comprises at least one first step and at least one second step which are implemented during the construction of the control plan of the motor elements of the machine tool by recording of sets (6) of instructions, at the earliest after the recording of each set (6) of instructions defining a machining operation (4),
- the first step consisting of a step of automatic search in order to detect whether the machining operation (4) under consideration must be processed as a model operation (40) owing to the existence of a corresponding clone operation (400), and
- the second step consisting of a step during the course of which, when a model operation (40) and the corresponding clone operation (400) are found,
• the set (6) of instructions constituting the model operation is linked with
• the set (6) of instructions constituting the corresponding clone operation (400), and this
through at least one predetermined linking relationship (R) and such that the subsequent modification of at least one predetermined piece of information (7) of either one of these two sets (6) of instructions causes the automatic modification of at least one likewise predetermined piece of information (7) of the other set (6) of instructions which is linked to it.

10. Storage medium on which the software is registered comprising codes of instructions or instructions themselves to be read or stored on a storage medium, said codes being able to be executed by a computer for carrying out the management method according to the invention.

11. Control device for a machine tool, for implementing the information management method for constructing a plan for control of the motor elements (2) of a machine tool (3) with a view to creating a plurality of pieces which are identical to one another,
this machine tool (3) being, on the one hand, linked to said control device (5) intended to use the control plan (1) and, on the other hand, conceived to allow the machining of at least two pieces, which are a model piece (30) and at least one clone piece (31), the realisation of at least one of the pieces referred to as model piece (30) and clone piece (31) requiring predetermined machining operations (4), among them
• at least one model operation (40), and
• at least one other machining operation (4) which, substantially identical to the model operation (40), is referred to as clone operation (400),
each model operation (40) and each clone operation (400) being defined by at least one set (6) of instructions made up of a juxtaposition of data (7) put in a predetermined order and consisting of data (7) which are used by the control device (5) to control at least one adapted motor element (2),
each set (6) of instructions being organised in such a way that at least one piece of the information (7) constituting it can be modified,
the construction of the control plan (1) being carried out by recording of sets (6) of instructions on a memory medium (10),
said control device comprising functional means **characterised in that** they consist of functional blocks for, during the construction of the control plan by recording of sets (6) of instructions, at the earliest after having recorded each set (6) of instructions defining a machining operation (4) and according to an automatic method established beforehand:
- achieving an automatic search to detect whether the machining operation (4) under consideration must be processed as a model operation (40) owing to the existence of a corresponding clone operation (400), and
- when a model operation (40) and the corresponding clone operation (400) are found, linking the set (6) of instructions constituting the model operation to the set (6) of instructions constituting the corresponding clone operation (400) through at least one predetermined linking relationship (R) and such that the subsequent modification of at least one predetermined piece of information (7) of either one of these two sets (6) of instructions, causes the automatic modification of at least one likewise predetermined piece of information (7) of the other set (6) of instructions to which it is linked.

12. Control device according to claim 11, **characterised in that** it comprises:
- a computer to execute codes of instructions, recorded on a storage medium,
- an information display screen (11) for display of a control plan (1) in the form of a matrix (12) comprising substantially parallel rows, such as columns (120),
• each row (120) being assigned to a machining station of the machine tool (3), and comprising at least one box (1200) which, assigned to a machining operation (4), has a longitudinal dimension (L) in the longitudinal direction of the row (120) under consideration which is proportional to the duration of performance of the machining operation (4) under consideration,
• each linking relationship (R) between each model operation (40) and the corresponding clone operation (400) being displayed in a form discernible by an operator.

13. Machine tool **characterised in that** it comprises a control device according to one of the claims 11 or 12.

## Patentansprüche

1. Informationsverwaltungsverfahren zur Konstruktion einer Steuerebene (1) von Antriebteilen (2) einer Werkzeugmaschine (3) für die Herstellung einer Vielzahl von Werkstücken, die untereinander identisch sind,
wobei diese Werkzeugmaschine (3) einerseits mit einer Steuervorrichtung (5) verbunden ist, die dazu vorgesehen ist, die Steuerebene (1) zu betreiben, und andererseits dazu entworfen ist, um die Bearbeitung von mindestens zwei Werkstücken zu ermöglichen, darunter ein Modell-Werkstück (39) und mindestens ein Klon-Werkstück (31), wobei die Herstellung von mindestens einem der Werkstücke, genannt Modell-Werkstück (30) und Klon-Werkstück (31), bestimmte Bearbeitungsvorgänge erfordert, darunter
• mindestens einen Modell-Vorgang (40) und
• mindestens einen anderen Bearbeitungsvorgang (4), der, im Wesentlichen identisch mit dem Modell-Vorgang (40), Klon-Vorgang (400) genannt wird,
wobei jeder Modell-Vorgang (40) und jeder Klon-Vorgang (400) durch mindestens einen Satz (6) von Anweisungen definiert ist, die aus einer Nebeneinanderstellung von Informationen (7) besteht, die in einer bestimmten Reihenfolge angeordnet sind und Informationen (7) umfassen, die von der Steuervorrichtung (5) verwendet werden, um mindestens ein geeignetes Antriebteil (2) zu steuern,
wobei jeder Satz (6) von Anweisungen so organisiert ist, dass mindestens eine der Informationen (7), die ihn bildet, verändert werden kann,
wobei die Konstruktion der Steuerebene (1) durch Aufzeichnung von Sätzen (6) von Anweisungen auf einem Speichermedium (10) erfolgt,
wobei dieses Verfahren **dadurch gekennzeichnet ist, dass** bei der Konstruktion der Steuerebene durch Aufzeichnung von Sätzen (6) von Anweisungen frühestens nach der Aufzeichnung jedes Satzes (6) von Anweisungen, der einen Bearbeitungsvorgang (4) definiert und gemäß einer automatischen Prozedur, die im Voraus festgesetzt wurde:
- eine automatische Suche durchgeführt wird, um festzustellen, ob der Bearbeitungsvorgang (4), der in Betracht gezogen wird, wie ein Modell-Vorgang (40) aufgrund der Tatsache behandelt werden muss, dass ein entsprechender Klon-Vorgang (400) vorhanden ist, und
- wenn ein Modell-Vorgang (40) und der entsprechende Klon-Vorgang (400) gefunden werden, der Satz (6) von Anweisungen, der den Modell-Vorgang bildet, mit dem Satz (6) von Anweisungen, der den entsprechenden Klon-Vorgang (400) bildet, durch mindestens eine Verknüpfungsbeziehung (R) verbunden wird, die im Voraus bestimmt und derartig gestaltet ist, dass die letzte Änderung mindestens einer Information (7), die festgelegt wurde, einer dieser zwei Sätze (6) von Anweisungen die automatische Änderung von mindestens einer Information (7), die ebenfalls festgelegt wurde, des anderen Satzes (6) von Anweisungen, der mit ihr verbunden ist, veranlasst.

2. Verfahren nach Anspruch 1, **dadurch gekennzeichnet, dass** jeder Satz (6) von Anweisungen, der einen Modell-Vorgang (40) bildet, mit dem Satz (6) von Anweisungen, der einen entsprechenden Klon-Vorgang (400) bildet, durch mindestens eine Verknüpfungsbeziehung (R) der reversiblen Art verbunden wird, d.h. eine Verknüpfungsbeziehung (R), die zu jedem gewählten Zeitpunkt gelöscht werden kann.

3. Verfahren nach Anspruch 1 oder 2, **dadurch gekennzeichnet, dass**:
- ein Anzeigebildschirm (11) eingesetzt wird, auf dem eine Matrix (12) gebildet wird, die im Wesentlichen parallele Reihen umfasst,
- jede Reihe (120) einer Bearbeitungsstation der Werkzeugmaschine (3) zugeordnet wird, und
- in jeder Reihe (120) jeder Bearbeitungsvorgang (4) in Form eines Feldes (1200) angezeigt wird, dessen Längsausdehnung (L) in der Längsrichtung der Reihe (120), die in Betracht gezogen wird, proportional zur Dauer der Durchführung des Bearbeitungsvorgangs (4) ist, der in Betracht gezogen wird,
- jede Verknüpfungsbeziehung (R) zwischen jedem Modell-Vorgang (40) und dem entsprechenden Klon-Vorgang (400) angezeigt wird.

4. Verfahren nach Anspruch 3, **dadurch gekennzeichnet, dass** bei der Konstruktion der Steuerebene (1)
- in jeder Reihe (120) der Matrix (12) jeder Vorgang in Form eines Feldes (1200) angezeigt wird, dessen Längsausdehnung (L) proportional zur Dauer der Durchführung des Bearbeitungsvorgangs (4), der in Betracht gezogen wird, ist,
- die Bearbeitungsvorgänge (4) zusammengefasst in Gruppen angezeigt werden, indem die Felder (1200) so nebeneinander gestellt werden, dass sie eine Gruppe von Feldern (1200) bilden, deren gesamte Längsausdehnung (LT) proportional zur Dauer der Gruppe der Bearbeitungsvorgänge (4), die in Betracht gezogen werden, ist.

5. Verfahren nach einem der Ansprüche 1 bis 4 zur Durchführung von Bearbeitungsvorgängen (4) auf:
- einem Modell-Werkstück (30), umfassend einen ersten Abschnitt (301) und einen zweiten Abschnitt (302), die durch Bearbeitung hergestellt werden, wobei der erste Abschnitt (301) auf einem ersten Teil (3A) der Werkzeugmaschine (3) hergestellt wird und der zweite Abschnitt (302) auf einem zweiten Teil (3B) der Werkzeugmaschine (3) hergestellt wird, und
- mindestens einem Klon-Werkstück (31), umfassend einen ersten Abschnitt (311) und einen zweiten Abschnitt (312), die durch Bearbeitung hergestellt werden, wobei der erste Abschnitt (311) auf dem ersten Teil (3A) der Werkzeugmaschine (3) hergestellt wird und der zweite Abschnitt (312) auf dem zweiten Teil (3B) der Werkzeugmaschine (3) hergestellt wird,
wobei dieses Verfahren **dadurch gekennzeichnet ist, dass** bei der Konstruktion des Steuerplans (1), um die Modell-Vorgänge (40) und die Klon-Vorgänge (400) zu suchen, die Bearbeitungsvorgänge (4), die auf dem ersten Teil (3A) der Werkzeugmaschine (3) hergestellt werden, und Vorgänge, die auf dem zweiten Teil (3B) der Werkzeugmaschine (3) hergestellt werden, getrennt in Betracht gezogen werden.

6. Verfahren nach einem der Ansprüche 1 bis 4 zur Durchführung von Bearbeitungsvorgängen (4) auf:
- einem Modell-Werkstück (30), umfassend einen ersten Abschnitt (301) und einen zweiten Abschnitt (302), die durch Bearbeitung hergestellt werden, wobei der erste Abschnitt (301) auf einem ersten Teil (3A) der Werkzeugmaschine (3) hergestellt wird und der zweite Abschnitt (302) auf einem zweiten Teil (3B) der Werkzeugmaschine (3) hergestellt wird, und
- mindestens einem Klon-Werkstück (31), umfassend einen ersten Abschnitt (311) und einen zweiten Abschnitt (312), die durch Bearbeitung hergestellt werden, wobei der erste Abschnitt (311) auf dem ersten Teil (3A) der Werkzeugmaschine (3) hergestellt wird und der zweite Abschnitt (312) auf dem zweiten Teil (3B) der Werkzeugmaschine (3) hergestellt wird,
wobei dieses Verfahren **dadurch gekennzeichnet ist, dass** bei der Konstruktion des Steuerplans (1), um die Modell-Vorgänge (40) und die Klon-Vorgänge (400) zu suchen, die Bearbeitungsvorgänge (4), die auf dem ersten Teil (3A) der Werkzeugmaschine (3) hergestellt werden, und Vorgänge, die auf dem zweiten Teil (3B) der Werkzeugmaschine (3) hergestellt werden, zusammen in Betracht gezogen werden.

7. Verfahren nach einem der Ansprüche 1 bis 6, **dadurch gekennzeichnet, dass** jeder Satz (6) von Anweisungen so organisiert wird, dass er für jeden Bearbeitungsvorgang (4) Informationen (7) umfasst, die mindestens Folgendes identifizieren:
- das Antriebteil (2), das vom Bearbeitungsvorgang (4), der durchgeführt werden soll, betroffen ist,
- das Bearbeitungswerkzeug, das durch den Bearbeitungsvorgang (4), der durchgeführt werden soll, betroffen ist,
- einen Bearbeitungsvorgang (4), der vom Bearbeitungsvorgang (4), der betroffen ist, verschieden ist, und der einem Zeitdruck unterliegt.

8. Verfahren nach einem der Ansprüche 1 bis 7, **dadurch gekennzeichnet, dass** es zusammen mit einem Verfahren zur Steuerung von Antriebteilen (2) von Werkzeugsystemen, die die Werkzeugmaschine umfasst, verwendet wird, d.h. von beweglichen Elementen der Werkzeugmaschine,
wobei dieses Verfahren zur Steuerung mindestens eine Schritttabelle einsetzt, die, verbunden mit mindestens einem bestimmten Antriebteil (2), das dazu bestimmt ist, eine Verschiebung entlang einer Achse, die ebenfalls festgelegt ist, sicherzustellen, in Form eines ersten Gitters dargestellt werden kann, das von zwei Gruppen von sich überschneidenden Linien definiert ist, bildend:
- eine erste Reihe von nebeneinander gestellten Feldern, von denen jedes mindestens einem elementaren Zeitpunkt zur Steuerung der inkrementellen Verschiebung des Antriebteils (2), das betroffen ist, zugewiesen wird, und
- eine zweite Reihe von nebeneinander gestellten Feldern, von denen jedes einem Sollwert zur inkrementellen Verschiebung, genannt erster Sollwert, zugewiesen ist, der auf das Antriebteil (2) ab dem elementaren Zeitpunkt, angegeben im Feld der ersten Reihe, die daneben gestellt ist, angewandt werden muss, wobei der Wert jedes ersten Sollwertes je nach dem Profil des Werkstückes, das bearbeitet werden soll, im Voraus festgesetzt wird.

9. Software zur Durchführung des Verfahrens nach einem der Ansprüche 1 bis 8,
wobei diese Software Anweisungscodes oder Anweisungen umfasst, die dazu geeignet sind, gelesen oder auf einem Speichermedium abgelegt zu werden,
wobei die Codes durch einen Computer ausgeführt werden können,
wobei diese Software **dadurch gekennzeichnet ist, dass** sie mindestens einen ersten Schritt und mindestens einen zweiten Schritt umfasst, die bei der Konstruktion der Steuerebene der Antriebteile der Werkzeugmaschine durch Aufzeichnung von Sätzen (6) von Anweisungen frühestens nach der Aufzeichnung jedes Satzes (6) von Anweisungen, der einen Bearbeitungsvorgang (4) definiert, durchgeführt werden,
- wobei der erste Schritt ein Schritt zur automatischen Suche ist, um festzustellen, ob der Bearbeitungsvorgang (4), der in Betracht gezogen wird, wie ein Modell-Vorgang (40) aufgrund der Tatsache behandelt werden muss, dass ein entsprechender Klon-Vorgang (400) vorhanden ist, und
- wobei der zweite Schritt ein Schritt ist, im Laufe dessen, wenn ein Modell-Vorgang (40) und der entsprechende Klon-Vorgang (400) gefunden werden,
• der Satz (6) von Anweisungen, der den Modell-Vorgang bildet, verbunden wird mit
• dem Satz (6) von Anweisungen, der den entsprechenden Klon-Vorgang (400) bildet, und dies
durch mindestens eine Verknüpfungsbeziehung (R), die im Voraus festgelegt und derartig gestaltet ist, dass die letzte Änderung mindestens einer Information (7), die festgelegt wurde, einer dieser zwei Sätze (6) von Anweisungen die automatische Änderung von mindestens einer Information (7), die ebenfalls festgelegt wurde, des anderen Satzes (6) von Anweisungen, der mit ihr verbunden ist, veranlasst.

10. Speichermedium, auf dem die Software aufgezeichnet ist, umfassend Anweisungscodes oder Anweisungen, die dazu geeignet sind, gelesen oder auf einem Speichermedium abgelegt zu werden, wobei die Codes durch einen Computer ausgeführt werden können, um das Verwaltungsverfahren gemäß der Erfindung durchzuführen.

11. Steuervorrichtung für eine Werkzeugmaschine, um das Informationsverwaltungsverfahren zur Konstruktion einer Steuerebene (1) von Antriebteilen (2) einer Werkzeugmaschine (3) für die Herstellung einer Vielzahl von Werkstücken, die untereinander identisch sind, durchzuführen,
wobei diese Werkzeugmaschine (3) einerseits mit der Steuervorrichtung (5) verbunden ist, die dazu vorgesehen ist, die Steuerebene (1) zu betreiben, und andererseits dazu entworfen ist, um die Bearbeitung von mindestens zwei Werkstücken zu ermöglichen, darunter ein Modell-Werkstück (30) und mindestens ein Klon-Werkstück (31), wobei die Herstellung von mindestens einem der Werkstücke, genannt Modell-Werkstück (30) und Klon-Werkstück (31), bestimmte Bearbeitungsvorgänge (4) erfordert, darunter
• mindestens einen Modell-Vorgang (40) und
• mindestens einen anderen Bearbeitungsvorgang (4), der, im Wesentlichen identisch mit dem Modell-Vorgang (40), Klon-Vorgang (400) genannt wird,
wobei jeder Modell-Vorgang (40) und jeder Klon-Vorgang (400) durch mindestens einen Satz (6) von Anweisungen definiert ist, der durch eine Nebeneinanderstellung von Informationen (7) definiert ist, die in einer bestimmten Reihenfolge angeordnet sind und Informationen (7) umfassen, die von der Steuervorrichtung (5) verwendet werden, um mindestens ein geeignetes Antriebteil (2) zu steuern,
wobei jeder Satz (6) von Anweisungen so organisiert ist, dass mindestens eine der Informationen (7), die ihn bildet, verändert werden kann,
wobei die Konstruktion der Steuerebene (1) durch Aufzeichnung von Sätzen (6) von Anweisungen auf einem Speichermedium (10) erfolgt,
wobei die Steuervorrichtung funktionelle Mittel umfasst, **dadurch gekennzeichnet, dass** sie funktionelle Blöcke aufweisen, um bei der Konstruktion der Steuerebene durch Aufzeichnung von Sätzen (6) von Anweisungen frühestens nach der Aufzeichnung jedes Satzes (6) von Anweisungen, der einen Bearbeitungsvorgang (4) definiert und gemäß einem automatischen Vorgang, der im Voraus festgesetzt wurde:
- eine automatische Suche durchzuführen, um festzustellen, ob der Bearbeitungsvorgang (4), der in Betracht gezogen wird, wie ein Modell-Vorgang (40) behandelt werden muss aufgrund der Tatsache, dass ein entsprechender Klon-Vorgang (400) vorhanden ist, und
- wenn ein Modell-Vorgang (40) und der entsprechende Klon-Vorgang (400) gefunden werden, den Satz (6) von Anweisungen, der den Modell-Vorgang bildet, mit dem Satz (6) von Anweisungen, der den entsprechenden Klon-Vorgang (400) bildet, durch mindestens eine Verknüpfungsbeziehung (R) zu verbinden, die im Voraus bestimmt wurde, und derartig gestaltet ist, dass die letzte Änderung mindestens einer Information (7), die festgelegt wurde, einer dieser zwei Sätze (6) von Anweisungen die automatische Änderung von mindestens einer Information (7), die ebenfalls festgelegt wurde, des anderen Satzes (6) von Anweisungen, der mit ihr verbunden ist, veranlasst.

12. Steuerverfahren nach Anspruch 11, **dadurch gekennzeichnet, dass** es Folgendes umfasst:
- einen Computer, um Anweisungscodes, die auf einem Speichermedium abgelegt sind, auszuführen,
- einen Anzeigebildschirm (11) von Informationen, um einen Steuerplan (1) in Form einer Matrix (12) anzuzeigen, die Reihen umfasst, die im Wesentlichen parallel sind, wie z.B. Säulen (120),
• wobei jede Reihe (120) einer Bearbeitungsstation der Werkzeugmaschine (3) zugeordnet wird, und mindestens ein Feld (1200) umfasst, das, einem Bearbeitungsvorgang (4) zugeordnet, eine Längsausdehnung (L) in der Längsrichtung der Reihe (120), die in Betracht gezogen wird, aufweist, die proportional zur Dauer der Durchführung des Bearbeitungsvorgangs (4), der in Betracht gezogen wird, ist,
• wobei jede Verknüpfungsbeziehung (R) zwischen jedem Modell-Vorgang (40) und dem entsprechenden Klon-Vorgang (400) in einer Form angezeigt wird, die von einem Anwender wahrgenommen werden kann.

13. Werkzeugmaschine, **dadurch gekennzeichnet, dass** sie eine Steuervorrichtung nach einem der Ansprüche 11 oder 12 umfasst.
